**Europäisches Patentamt**

**European Patent Office**

**Office européen des brevets**

(11) Veröffentlichungsnummer: **0 228 574 B1**

# EUROPÄISCHE PATENTSCHRIFT

(45) Veröffentlichungstag der Patentschrift: **10.04.91**

(51) Int. Cl.⁵: **G06F 13/16**

(21) Anmeldenummer: **86116488.7**

(22) Anmeldetag: **27.11.86**

(54) Schaltungsanordnung zur Steuerung des Speicherzugriffs für einen Hauptprozessor und wenigstens einen Nebenprozessor.

(30) Priorität: **29.11.85 DE 3542281**

(43) Veröffentlichungstag der Anmeldung:
**15.07.87 Patentblatt 87/29**

(45) Bekanntmachung des Hinweises auf die
Patenterteilung:
**10.04.91 Patentblatt 91/15**

(84) Benannte Vertragsstaaten:
**AT BE CH DE FR GB IT LI NL SE**

(56) Entgegenhaltungen:
**EP-A- 0 094 042**
**US-A- 4 181 933**

(73) Patentinhaber: **Siemens Aktiengesellschaft**
**Wittelsbacherplatz 2**
**W-8000 München 2(DE)**

(72) Erfinder: **Zedlitz, Peter**
**Derchinger Strasse 55**
**W-8900 Augsburg(DE)**

## Beschreibung

Die Erfindung betrifft eine Schaltungsanordnung zur Steuerung des Speicherzugriffs für einen Hauptprozessor und wenigstens einen Nebenprozessor gemäß dem Oberbegriff des Patentanspruches 1.

Es sind im wesentlichen zwei Möglichkeiten zur Vergabe der Zugriffsberechtigung an die auf den gemeinsamen Speicher zugreifenden Prozessoren bekannt.

Die eine Verfahrensrealisierung erlaubt das Stillegen aller Prozessoren, die gegenüber dem, den Speicher anfordernden Prozessor eine niedrigere Priorität haben. Dabei wird der Speicher solange von dem aktiven Prozessor beaufschlagt, bis dieser entweder seine Zugriffe beendet hat, oder von einem höher priorisierten Prozessor zur Freigabe gezwungen wird. Nachteilig ist in diesem Verfahren die möglicherweise lange Totzeit der niedriger priorisierten Prozessoren, die somit für schnelle Reaktionen nicht zu gebrauchen sind.

Aus der US-4,181,933 ist eine Speichersteuerung bekannt, die im Zeitscheibenverfahren einem zentralen Speicher jeweils einen von mehreren Prozessoren in Abhängigkeit der Prozessorpriorität zuordnet.

Ein anderes Verfahren zur Zugriffsverteilung, bei dem lange Totzeiten vermieden werden, sieht eine erneute Vergabe einer Zugriffsberechtigung nach jedem beendeten Speicherzugriff vor. Diese Methode ermöglicht unter Verwendung einer intelligenten Prioritätssteuerung zumindest eine gewisse Reaktionsmöglichkeit eines jeden Prozessors. Allerdings kann eine Verlangsamung der Verarbeitungsgeschwindigkeit der einzelnen Prozessoren nicht vermieden werden.

Aus der EP-A-00 94 042 ist ein Verfahren zur Steuerung der Zugriffe eines Hauptprozessors und wenigstens eines Nebenprozessors auf einen gemeinsamen Speicher bekannt. Innerhalb der vom Hauptprozessor für einen Buszugriff benötigten Zeit wird der Speicher nur für eine, in ihrer Lage definierte Zeitspanne dem Hauptprozessor zugeordnet. Vor oder nach dieser Zeitspanne können seitens der Nebenprozessoren Speicherzugriffe erfolgen, deren jeweilige Dauer ebenso wie die Dauer der Zeitspanne nicht mehr als die Hälfte der Buszugriffszeit des Hauptprozessors mißt.

Die Aufgabe der vorliegenden Erfindung besteht nun darin, zur Durchführung des zuletzt genannten Verfahrens eine möglichst universell verwendbare Schaltungsanordnung anzugeben, die mit geringem Aufwand an eine beliebige Anzahl von Nebenprozessoren angepaßt werden kann und dabei unabhängig von den zeitlichen und hardwaremäßigen Eigenschaften der Nebenprozessoren ist.

Gelöst wird die Aufgabe erfindungsgemäß durch die im Anspruch 1 angegebenen Merkmale.

Vorteilhafte Weiterbildungen der Erfindung sind in den Unteransprüchen angegeben.

Diese Art der Schaltungsanordnung ist besonders vorteilhaft in kleinen Mikroprozessorsystemen, in denen der Arbeitsspeicher des Hauptprozessors schon die Bedingung zur Anwendung des Verfahrens erfüllt und genau zwei Speicherzugriffe während der Buszugriffszeit des Hauptprozessors erlaubt. Somit läßt sich nahezu eine Verdoppelung der Verarbeitungsleistung des Mikroprozessorsystems ohne kostenträchtigen Aufwand, nur durch den Einsatz eines zweiten Mikroprozessors als Nebenprozessor erreichen. Ein Nebenprozessorzugriff auf den Arbeitsspeicher wird dabei höchstens um die Dauer eines Hauptprozessorbuszyklusses verlängert.

Ein Ausführungsbeispiel der Erfindung wird im folgenden anhand der Zeichnung näher erläutert. Dabei zeigen:

Fig. 1    das Prinzipschaltbild einer Speicherzugriffssteuerung für einen Hauptprozessor und einen Nebenprozessor;

Fig. 2    ein Übersichtszeitdiagramm mit den für die Speicherzugriffssteuerung relevanten Signalen;

Fig. 3    eine Schaltungsanordnung zur Steuerung der Zugriffsberechtigung für einen Haupt- und mehrere Nebenprozessoren;

Fig. 4    eine Schaltungsanordnung zur Erzeugung der für den jeweiligen Speicherzugriff notwendigen Steuersignale;

Fig. 5    eine Schaltungsanordnung zum zeitgerechten Rücksetzen der in der Schaltung gemäß Fig. 3 verwendeten Kippstufen.

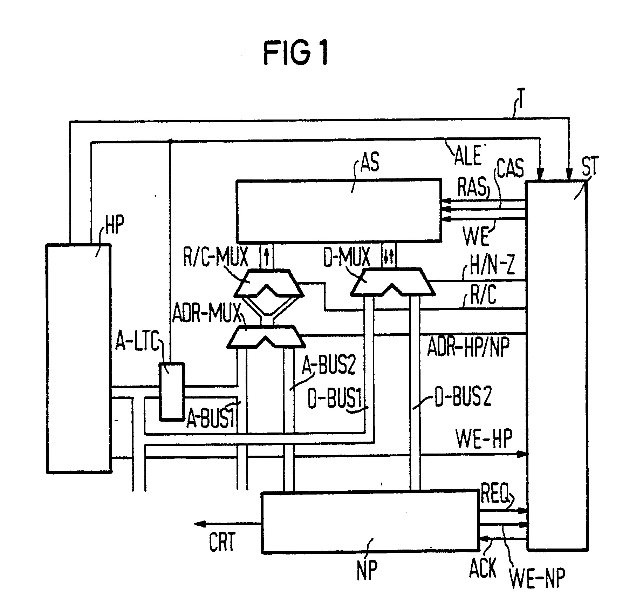

Die Fig. 1 zeigt ein Blockschaltbild für eine Speicherzugriffssteuerung mit einem Haupt- und einem Nebenprozessor. Diese z.B. für ein Datensichtgerät vorgesehene Schaltung besteht im wesentlichen aus einem Hauptprozessor HP mit einem Arbeitsspeicher AS, einem Nebenprozessor NP und einer gemeinsamen Steuerung ST. Der Adreß-Zwischenspeicher bzw. das Adreßlatch A-LTC speichert die ausgegebene Adresse des Hauptprozessors HP. Dem Arbeitsspeicher AS sind eingangsseitig zwei Adreßmultiplexer ADR-MUX und R/C-MUX sowie ein bidirektionaler Datenmultiplexer D-MUX vorgeschaltet, die jeweils die Adreßleitungen A-BUS 1,2 und Datenleitungen D-BUS 1,2 von Haupt- und Nebenprozessor in Abhängigkeit von dem Steuersignal ADR-HP/NP, dem Adreß-Umschaltsignal R/C und dem Zustandssignal H/N-Z aus der Steuerung ST durchschalten. Der Hauptprozessor HP wird im vorliegenden Beispiel zur Informationsverarbeitung und zur Steuerung des Sichtgerätes eingesetzt, während der Nebenprozessor NP als Bildprozessor zur Versorgung der analogen Bildsteuerung CRT mit den im Arbeitsspeicher AS vom Hauptprozessor HP aufbereiteten Daten dient. Da die Bildsteuerung CRT zum Bildaufbau ständig (entsprechend der Bildwechselfrequenz) mit der gesamten Bildinformation neu versorgt werden muß und keine Zwischenspeicherung in einem gesonderten Speicher vorgesehen ist, muß ein schneller und direkter Datenweg zum Arbeitsspeicher AS vorhanden sein. Mit Hilfe des bidirektionalen Multiplexers D-MUX werden deshalb die Datenleitungen D-BUS 2 des Nebenprozessors NP oder die Datenleitungen D-BUS 1 des Hauptprozessors HP an den Arbeitsspeicher AS geschaltet. Die programmtechnische Verständigung zwischen Haupt- und Nebenprozessor läuft ebenfalls über den gemeinsamen Arbeitsspeicher AS ab. Deshalb muß der Nebenprozessor NP auch schreibend auf den Arbeitsspeicher AS zugreifen können.

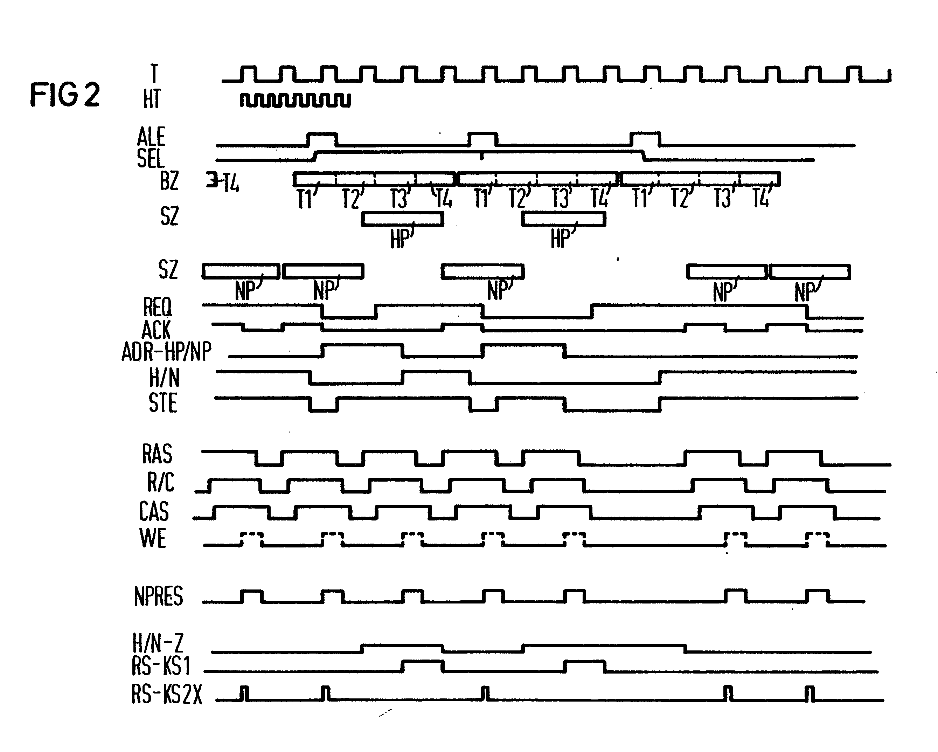

Die Funktion der Schaltung nach Fig. 1 wird im folgenden anhand des in Fig. 2 dargestellten Zeitdiagramms näher erläutert.

Ein Buszugriff eines Mikroprozessors benötigt einen Zeitraum, der einem Vielfachen der Periodendauer des Prozessortaktes entspricht. Im vorliegenden Beispiel wird ein Buszugriff BZ des Hauptprozessors HP mit vier Taktzyklen T1,...,T4 des Hauptprozessortaktes T angesetzt. Außerdem muß der gewählte Arbeitsspeicher AS eine Zykluszeit haben, die nicht größer als die Dauer zweier Taktzyklen des Hauptprozessortaktes T ist. Somit wird sichergestellt, daß ein zweiter Speicherzugriff SZ auf den Arbeitsspeicher AS innerhalb des Zeitraumes der vier Taktperioden möglich ist.

Die Lage des Zeitraumes für den Speicherzugriff SZ-HP des Hauptprozessors HP bleibt innerhalb der vier Takte immer konstant, wobei das Adreßfreigabesignal ALE den Taktzyklus T1 erkennen läßt. Sie ist schaltungstechnisch so festgelegt, daß einerseits die Zugriffszeit des Arbeitsspeichers AS ausreicht, um die Daten rechtzeitig dem Hauptprozessor HP zur Verfügung zu stellen (spätest möglicher Zeitpunkt), und andererseits die Schreibdaten aus dem Hauptprozessor HP spätestens zum spezifizierten Zeitpunkt am Arbeitsspeicher AS anliegen (frühest möglicher Zeitpunkt). Der Beginn eines Speicherzugriffs SZ-HP des Hauptprozessors HP ist im vorliegenden Beispiel in den Taktzyklus T2 gelegt. Die Dauer eines Speicherzugriffs SZ entspricht dabei zwei Taktzyklen des Hauptprozessortaktes T.

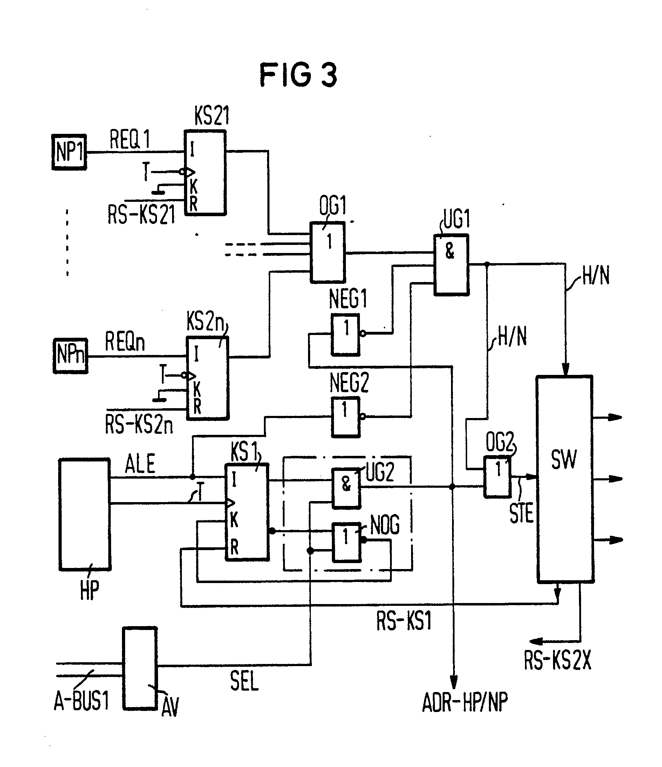

In Fig. 2 ist außerdem dargestellt, wie die somit verbleibende Zeit von einem Nebenprozessor NP genützt werden kann. Ein Speicherzugriffswunsch eines Nebenprozessors NP wird durch Aktivierung des Adreßfreigabesignals REQ der Steuerung ST mitgeteilt. Der Nebenprozessor NP wartet dann so lange, bis die Steuerung ST den gewünschten Speicherzugriff SZ beginnt und dies durch ein Quittungssignal ACK dem Nebenprozessor NP anzeigt. Beaufschlagt der Hauptprozessor HP den Arbeitsspeicher AS nicht mit maximaler Frequenz, das bedeutet eine Pause zwischen zwei Buszugriffen BZ, so kann diese zusätzlich entstehende Zeit auch von einem Nebenprozessor NP für Speicherzugriffe SZ-NP genützt werden. Die weiteren, in Fig. 2 dargestellten Signale werden in Zusammenhang mit den Fig. 3 bis 5 erläutert.

Fig. 3 zeigt die Schaltungsanordnung, die das Einschleusen der Nebenprozessorspeicherzugriffe SZ-NP in die geschaffenen Zeitlücken ermöglicht. Der Speicherzugriffswunsch des Hauptprozessors HP wird an dem frühesten, einen allgemeinen Buszugriff BZ qualifizierenden Adreßfreigabesignal ALE von einer JK-Kippstufe KS1 erkannt. Der Ausgang dieser JK-Kippstufe KS1 wird über ein UND-Glied UG2 sowohl dem Adreßmultiplexer ADR-MUX aus Fig. 1 als Steuersignal ADR-HP/NP, als auch über eine ODER-Verknüpfung OG2 als Startfreigabesignal STE einem zyklischen Schaltwerk SW im Sinne einer Startbedingung zugeführt. Dieses zyklische Schaltwerk SW steuert den ununterbrechbaren Ablauf des eigentlichen Speicherzugriffs SZ. Es arbeitet synchron zum Hauptprozessortakt T, beginnt jeden Speicherzugriff SZ mit einer steigenden Flanke des Hauptprozessortaktes T und geht nach Beendigung des Speicherzugriffs SZ wieder in den Ausgangszustand über. ·

Der zweite Eingang der ODER-Verknüpfung OG2 ist mit dem Ausgangssignal H/N eines Dreifach-UND-Gliedes UG1 beaufschlagt, das auch dem zyklischen Schaltwerk SW zugeführt ist. Dieses Ausgangssignal H/N trägt die Information darüber, ob ein Zugriffswunsch eines Nebenprozessors NP erkannt wurde und sowohl kein Zugriffswunsch des Hauptprozessors HP vorliegt, als auch sichergestellt ist, daß ein angestoßener Nebenprozessorspeicherzugriff SZ-NP zum Zeitpunkt eines Hauptprozessorspeicherzugriffs SZ-HP beendet sein wird. Dazu ist der erste Eingang des UND-Gliedes UG1 mit dem Ausgang eines ODER-Gliedes OG1 verbunden. Das Ausgangssignal der Kippstufe KS1 wird über das UND-Glied UG2 und über einen Negator NEG1 an den zweiten Eingang des UND-Gliedes UG1 angelegt. Auf den dritten Eingang des UND-Gliedes UG1 ist das von einem zweiten Negator NEG2 negierte Adreßfreigabesignal ALE des Hauptprozessors HP geführt. Der Beginn eines Nebenprozessorspeicherzugriffs SZ-NP im Taktzyklus T1, könnte nämlich zu einer Überlappung mit einem Speicherzugriff SZ-HP des Hauptprozessors HP führen.

Das ODER-Glied OG1 ist nur im Falle mehrerer Nebenprozessoren NP1, ..., NPn nötig, deren mögliche Existenz im folgenden berücksichtigt wird.

Dieses ODER-Glied OG1 verknüpft die Ausgänge der den n Nebenprozessoren NP1,...,NPn zugeordneten JK-Kippstufen KS21 bis KS2n. Diese JK-Kippstufen dienen zur Erkennung der Adreßfreigabesignale REQ1, ..., REQn der jeweiligen Nebenprozessoren NP1,...,NPn, die zu diesem Zweck auf den Eingang der jeweils zugeordneten JK-Kippstufe KS21, ..., KS2n geführt sind. Die Erkennung eines Zugriffswunsches sowohl vom Haupt- wie vom Nebenprozessor erfolgt synchron zum Hauptprozessortakt T und bleibt gespeichert (K-Eingang inaktiv), bis das zyklische Schaltwerk SW die Abarbeitung des gewünschten Speicherzugriffs SZ begonnen hat. Die betreffende Kippstufe wird dann durch die Rücksetz-Signale RS-KS1 bzw. RS-KS2X aus dem zyklischen Schaltwerk SW wieder zurückgesetzt.

Das UND-Glied UG2 qualifiziert das Ausgangssignal der Kippstufe KS1 mit dem Quittungssignal SEL eines Adreßvergleichers AV, das nur dann positiv wird, wenn die ausgegebene Adresse des Hauptprozessors HP einen Zugriffswunsch auf den Arbeitsspeicher AS bestätigt. Ist dies nicht der Fall, sind die Startbedingungen für einen Hauptprozessorspeicherzugriff SZ-HP nicht erfüllt und das Steuersignal ADR-HP/NP (siehe Fig. 3) bleibt inaktiv. Es erfolgt kein Umschalten des Adreßmultiplexers ADR-MUX und ein Nebenprozessorspeicherzugriff SZ-NP wird nicht unnötig zurückgehalten. Unter diesen Umständen ist das Ausgangssignal des NOR-Gliedes NOG, das auf den K-Eingang der JK Kippstufe KS1 geführt ist, positiv und ermöglicht ein Zurücksetzen der JK-Kippstufe KS1 bei der nächsten steigenden Flanke des Hauptprozessortaktes T. Als Eingangssignale für das NOR-Glied sind dazu das negierte Ausgangssignal der JK-Kippstufe KS1 und das Quittungssignal SEL des Adreßvergleichers AV vorgesehen.

Fig. 2 verdeutlicht den Zeitpunkt der Erkennung des Speicherzugriffswunsches im Zusammenhang zum jeweiligen Beginn des betreffenden Speicherzugriffs SZ.

Die zur Erkennung des Adreßfreigabesignals ALE dem Hauptprozessor HP zugeordnete JK-Kippstufe KS1 wird bei aktivem ALE mit einer steigenden Flanke des Hauptprozessortaktes T im Taktzyklus T1 gesetzt.

Bis zum Beginn des durch ALE angeforderten Speicherzugriffs SZ, im Taktzyklus T2, bleibt somit ein Zeitabstand von einer Taktperiode des Hauptprozessortaktes T. Während dieser Taktperiode muß durch das Quittungssignal SEL ein von KS1 erkannter Zugriffswunsch bestätigt werden, der an dem aktivierten Steuersignal ADR-HP/NP erkennbar ist, und über die Aktivierung des Startfreigabesignals STE zu einem Speicherzugriff SZ-HP des Hauptprozessors HP führt. Da das Steuersignal ADR-HP/NP auch den Adreßmultiplexer ADR-MUX steuert (siehe Fig. 1), liegen zu Beginn des Hauptprozessorspeicherzugriffs SZ-HP in diesem Fall die Adreßleitungen A-BUS 1 des Hauptprozessors HP am Arbeitsspeicher AS an. Das dem zyklischen Schaltwerk SW zugeführte Ausgangssignal H/N wird bei aktivem Adreßfreigabesignal ALE sofort desaktiviert und bleibt inaktiv, wenn das Quittungssignal SEL einen Speicherzugriffswunsch des Hauptprozessors HP bestätigt.

Die den Nebenprozessoren NP1,...,NPn zugeordneten JK-Kippstufen KS21 bis KS2n werden mit einer fallenden Flanke des Hauptprozessortaktes T getaktet. Der dadurch entstehende minimale zeitliche Abstand, eine inaktive Phase des Hauptprozessortaktes T, von der Erkennung eines Adreßfreigabesignals REQX bis zum frühest möglichen Beginn eines Nebenprozessorspeicherzugriffs SZ-NP ist für die metastabile Einschwingphase der durch die Adreßfreigabesignale REQ1,...,REQn asynchron angesteuerten Kippstufen KS21 bis KS2n nötig. Wird nur ein Adreßfreigabesignal REQX aktiv, beträgt der maximale Zeitabstand von der Aktivierung des Adreßfreigabesignals REQX bis zum Beginn des zugehörigen Nebenprozessorspeicherzugriffs SZ-NP vier Taktperioden des Hauptprozessortaktes T und trifft dann zu, wenn das Adreßfreigabesignal REQX unmittelbar nach einer fallenden Flanke des Hauptprozessortaktes T aktiviert wird, und die nächste Periode des Hauptprozessortaktes T ein Taktzyklus T1 ist, dem ein Hauptprozessorspeicherzugriff SZ-HP folgt.

Aus dem Verhalten des Steuersignals ADR-HP/NP ist in Fig. 2 zu erkennen, daß der Adreßmultiplexer ADR-MUX schon im jeweilig vorhergehenden Speicherzugriff SZ umgeschaltet wird, damit zum Beginn des nächsten Speicherzugriffs SZ die benötigte Adresse bereits stabil am Arbeitsspeicher AS anliegt.

An einem statischen Schreib-Lesespeicher muß die Adresse während der gesamten Dauer des Speicherzugriffs SZ anliegen. Zur kurzzeitigen Zwischenspeicherung müßte deshalb ein Register vorgesehen werden. Ein dynamischer Speicher wie im vorliegenden Beispiel verwendet, benötigt dagegen die Adresse nur am Anfang des Speicherzugriffs SZ, da er sie selbst in internen Registern hält.

Die Tatsache, daß dynamische Speicher ständig aufgefrischt werden müssen, erfordert im vorliegenden Ausführungsbeispiel keinen zusätzlichen Aufwand, weil der als Bildprozessor ausgeführte Nebenprozessor NP die relevanten Adressen zyklisch zum Zweck des Bildaufbaus ausliest und damit indirekt das Auffrischen erledigt.

Die Ansteuerung des Arbeitsspeichers AS durch das zyklische Schaltwerk SW läßt keinen Unterschied erkennen, ob der jeweilige Speicherzugriff SZ vom Hauptprozessor HP oder vom Nebenprozessor NP angeregt wurde.

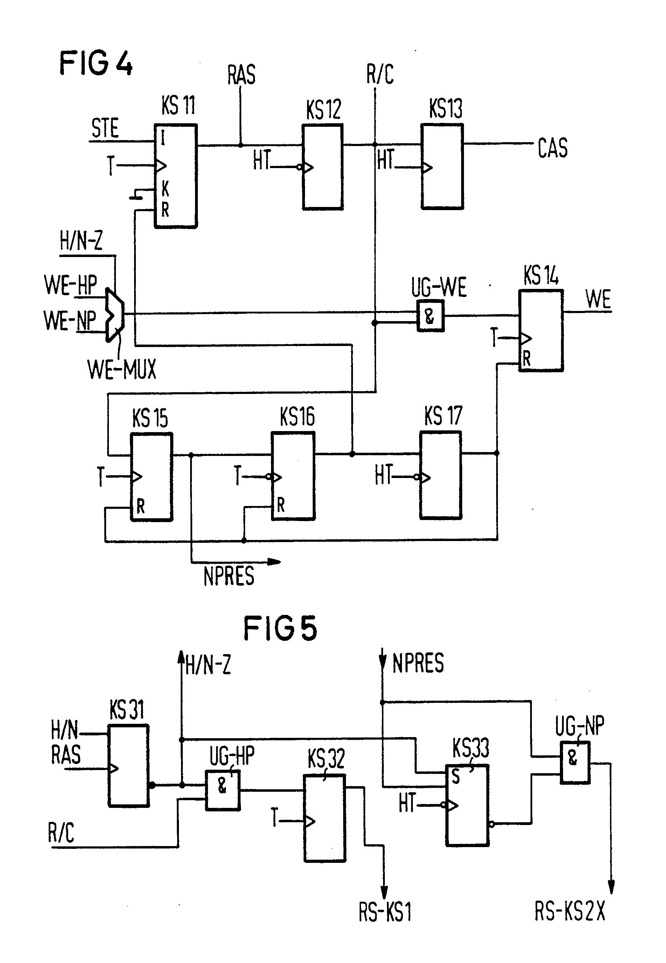

Einzelheiten des in Zusammenhang mit Fig. 3 erwähnten zyklischen Schaltwerks SW sind in Fig. 4 dargestellt. Dieses zyklische Schaltwerk SW besteht zunächst aus drei Kippstufen KS11, KS12, KS13, die nach Art eines Schieberegisters in Serie geschaltet sind. Am Eingang der ersten Kippstufe KS11 wird das Startfreigabesignal STE zugeführt (siehe auch Fig. 3). Die erste Kippstufe KS11 ist eine JK-Kippstufe, deren Ausgangssignal als Zeilenadreßsignal RAS den dynamischen Speicher in der Weise ansteuert, daß die anliegenden Zeilenadressen übernommen werden können. Mit dem Ausgangssignal der zweiten Kippstufe KS12, einem Adreß-Umschaltsignal R/C wird die Umschaltung von der Zeilen- zur Spaltenadresse gesteuert (vergl. Fig. 1 Multiplexer R/C-MUX). Mit dem Ausgangssignal der dritten Kippstufe KS13, dem sogenannten Spaltenadreßsignal CAS, werden schließlich die Spaltenadressen in den Speicher übernommen.

Ein Hilfstakt HT, der die dreifache Frequenz des Hauptprozessortaktes T aufweist und mit diesem flankengenau synchronisiert ist, macht die Verwendung von Laufzeitgliedern in der Schaltung unnötig.

Die JK-Kippstufe KS11 wird bei aktivem J-Eingang mit einer steigenden Flanke des Hauptprozessortaktes T gesetzt und bleibt dann unabhängig vom Zustand des Startfreigabesignals STE solange gesetzt, bis (K-Eingang inaktiv) sie von einem Rücksetzsignal zurückgesetzt wird. Die zweite Kippstufe KS12 wird mit einer fallenden Flanke und die dritte Kippstufe KS13 mit einer steigenden Flanke des Hilfstaktes HT angesteuert.

Jeweils eines der beiden Schreibsignale WE-HP oder WE-NP von Haupt- oder Nebenprozessor wird über einen von einem Zustandssignal H/N-Z gesteuerten Multiplexer WE-MUX und über ein UND-Glied UG-WE an den Eingang einer vierten Kippstufe KS14 durchgeschaltet. Die Kippstufe KS14 dient der Erzeugung des Schreibsignals WE für den Arbeitsspeicher AS. Getaktet wird sie von der steigenden Flanke des Hauptprozessortaktes T. Das UND-Glied UG-WE stellt sicher, daß das am Ausgang der Kippstufe KS14 auftretende Schreibsignal WE nur während eines Speicherzugriffs SZ aktiviert werden kann.

Durch die weiteren Kippstufen KS15, KS16 und KS17, die ebenfalls nach Art eines Schieberegisters in Serie geschaltet sind, wird der Rücksetzzeitpunkt der Kippstufen KS11, KS12, KS13 und KS14 festgelegt. Das Eingangssignal der Kippstufe KS15 entspricht dem Adreß-Umschaltsignal R/C der Kippstufe KS12. Somit können die Kippstufen KS15, KS16 und KS17 nur gesetzt werden, wenn ein Speicherzugriff SZ begonnen hat.

Die Kippstufe KS15 wird mit einer steigenden Flanke des Hauptprozessortaktes T geschaltet, während die Kippstufe KS16 von einer fallenden Flanke des Hauptprozessortaktes T getaktet wird. Die Kippstufe KS16 bestimmt den Rücksetzzeitpunkt der Kippstufe KS11. Die Kippstufe KS17 schließlich setzt sowohl die das Speicherschreibsignal WE generierende Kippstufe KS14 als auch die Kippstufen KS15 und KS16 zurück und stellt damit wieder den Ruhezustand des zyklischen Schaltwerkes SW her, der für den Start eines erneuten Speicherzugriffs SZ nötig ist. Zu diesem Zweck wird die Kippstufe KS17 mit einer fallenden Flanke des Hilfstaktes HT geschaltet, um vor der nächsten steigenden Flanke des Hauptprozessortaktes T (nächstmöglicher Beginn eines neuen Speicherzugriffs SZ) selbst wieder im Ruhezustand zu sein. Im Ruhezustand sind alle Kippstufen (KS11, ... , KS17) rückgesetzt.

In Fig. 2 ist eine zeitliche Übersicht der in diesem Schaltwerk SW erzeugten Signale RAS, R/C, CAS, WE in Verbindung zu den bereits bekannten Signalen dargestellt.

Das zeitgerechte Rücksetzen der in der Schaltung nach Fig. 3 enthaltenen JK-Kippstufen KS1, KS21, ..., KS2n wird durch eine Schaltungsanordnung nach Fig. 5 erzielt. Zu diesem Zweck sind drei Kippstufen KS31, KS32 und KS33 und die UND-Glieder UG-HP und UG-NP vorgesehen. Die Eingangs-Kippstufe KS31 speichert jeweils zu Beginn eines Speicherzugriffs SZ, ob der Speicherzugriff SZ dem Hauptprozessor HP oder dem Nebenprozessor NP zugeordnet ist. Dazu liegt am Eingang der Kippstufe KS31 das Ausgangssignal H/N des UND-Gliedes UG1 nach Fig. 3, und am Takteingang das erste einen begonnenen Speicherzugriff SZ anzeigende Zeilenadreß-Signal RAS (siehe Fig. 4).

Wird die Eingangs-Kippstufe KS31 gesetzt, bedeutet dies den Anfang eines Nebenprozessorspeicherzugriffs SZ-NP. Wird die Eingangs-Kippstufe KS31 rückgesetzt, hat ein Hauptprozessorspeicherzugriff SZ-HP begonnen.

Das negierte Ausgangssignal H/N-Z dieser Eingangs-Kippstufe KS31 stellt das Steuersignal für den Datenmultiplexer D-MUX (vgl. Fig. 1) dar und qualifiziert nun über ein UND-Glied UG-HP das Adreß-Umschaltsignal R/C aus der Kippstufe KS12 nach Fig. 4, wobei das Ausgangssignal des UND-Glieds UG-HP der Rücksetz-Kippstufe KS32 zugeführt ist. Diese Rücksetz-Kippstufe KS32 wird mit einer steigenden Flanke des Hauptprozessortaktes T geschaltet und gibt ein Rücksetzsignal RS-KS1 an die dem Hauptprozessor HP zugeordnete JK-Kippstufe KS1 (siehe Fig. 3) in der Mitte eines vom Hauptprozessor HP angeregten Speicherzugriffs SZ-HP aus (siehe Fig. 2).

Das Rücksetzen der den Nebenprozessoren NP1,..., NPn zugeordneten JK-Kippstufen KS21, ..., KS2n darf, wie das Rücksetzen der dem Hauptprozessor HP zugeordneten JK-Kippstufe KS1, erst dann erfolgen, wenn der entsprechende Speicherzugriff SZ schon abläuft und die Adresse übernommen wurde. Das Rücksetzsignal RS-KS2X allerdings muß so frühzeitig wieder inaktiviert werden, daß bei Bedarf der nächste Speicherzugriff SZ-NP des Nebenprozessors NPX sich ohne Lücke an den vorhergehenden Speicherzugriff SZ-NP desselben Nebenprozessors NPX anschließen kann, d. h. ein Adreßfreigabesignal REQX des Nebenprozessors NPX muß in der Kippstufe KS2X schon zu einem Zeitpunkt übernommen werden können (durch eine fallende Flanke des Hauptprozessortaktes T), der noch im Zeitraum eines ablaufenden Nebenprozessorspeicherzugriffs SZ liegt.

Wäre z. B. der Nebenprozessor NP kein Mikroprozessor, sondern nur ein Adreßzähler, der mit dem Rücksetzsignal RS-KS2X (siehe Fig. 5) für die Kippstufe KS2X getaktet wird, und das Adreßfreigabesignal REQX wäre ständig aktiv, so könnte sich im Idealfall ohne zeitliche Lücke ein Nebenprozessorspeicherzugriff SZ-NP an den anderen anschließen.

Das zeitgerechte Rücksetzsignal RS-KS21,...,RS-KS2n für die den Nebenprozessoren NP1,...,NPn zugeordneten Kippstufen KS21, ..., KS2n wird mit Hilfe des UND-Gliedes UG-NP durch Verknüpfung des Ausgangssignals NPRES der Kippstufe KS15 nach Fig. 4 und dem negierten Ausgangssignal der Rücksetz-Kippstufe KS33 nach Fig. 5 erzeugt. Das Ausgangssignal NPRES ist gleichzeitig das Eingangssignal der Rücksetz-Kippstufe KS33. Getaktet wird diese Rücksetz-Kippstufe KS33 von der fallenden Flanke des Hilfstaktes HT.

Da die einem Nebenprozessor NPX zugeordnete Kippstufe KS2X nur in einem Nebenprozessorspeicherzugriff SZ-NP zurückgesetzt werden darf, unterbindet das negierte Ausgangssignal der Eingangs-Kippstufe KS31 die Abgabe des Rücksetzsignals RS-KS2X dadurch, daß das negierte Ausgangssignal H/N-Z der Eingangs-Kippstufe KS31 auf den Setzeingang Z der Rücksetz-Kippstufe KS33 geführt ist und diese Rücksetz-Kippstufe KS33 während eines Hauptprozessorspeicherzugriffs SZ-HP setzt.

In Fig. 2 wird das Zeitverhalten der für die Rücksetzung der Kippstufen KS1 und KS21, ..., KS2n relevanten Signale dargestellt. Das Ausgangssignal NPRES der Kippstufe KS15 (siehe Fig. 4) wird jeweils in der Mitte eines jeden Speicherzugriffs SZ aktiviert. Abhängig vom Zustandssignal H/N-Z wird nun entweder das Rücksetzsignal RS-KS1 für die dem Hauptprozessor HP zugeordnete JK-Kippstufe KS1, oder das Rücksetzsignal RS-KS2X für die den betreffenden Nebenprozessor NPX zugeordnete JK-Kippstufe KS2X mitaktiviert.

Die Dauer der Rücksetzsignale RS-KS1 bzw. RS-KS2X muß so kurz sein, daß die betreffende Kippstufe KS1,KS21,...,KS2n nicht daran gehindert wird, ein Adreßfreigabesignal ALE bzw. REQ1, ..., REQn zum nächstmöglichen Zeitpunkt zu übernehmen.

Sind mehrere Nebenprozessoren NP1,...,NPn mit ihren zugeordneten Kippstufen KS21,...,KS2n vorhanden, muß eine externe Schaltung, z. B. eine Prioritätssteuerung, die durch die Adreßfreigabesignale REQ1,...,REQn angeforderten Zugriffswünsche der betreffenden Nebenprozessoren NP1,...,NPn speichern und den jeweiligen höchstpriorisierten Nebenprozessor (als Vertreter) auswählen. Danach müssen dann dessen Adreßleitungen, Datenleitungen und Schreibleitungen mit den Adreßleitungen A-BUS2, Datenleitungen D-BUS2 und Schreibleitungen WE-NP verbunden werden. Weiterhin muß diese externe Schaltung dafür sorgen, daß das Rücksetzsignal RS-KS2X nur derjenigen JK-Kippstufe KS2X als Rücksetzsignal zugeführt wird, die den Zugriffswunsch desjenigen Nebenprozessors NPX erkannt hat, dem der momentan ablaufende Nebenprozessorspeicherzugriff SZ-NP zugeordnet ist. Ebenso muß das Quittungssignal ACK (siehe Fig.1) nur für den betreffenden Nebenprozessor ausgegeben werden.

Bezugszeichenliste

zu Fig. 1

| | |
|---|---|
| HP | Hauptprozessor |
| AS | Arbeitsspeicher |
| NP | Nebenprozessor |
| ST | Steuerung |
| A-LTC | Adreß-Zwischenspeicher |
| ADR-MUX | Adreßmultiplexer |
| R/C-MUX | Adreßmultiplexer |
| D-MUX | Datenmultiplexer |
| A-BUS1 | Adreßleitungen des Hauptprozessors |
| A-BUS2 | Adreßleitungen des Nebenprozessors |
| D-BUS1 | Datenleitungen des Hauptprozessors |
| D-BUS2 | Datenleitungen des Nebenprozessors |
| ADR-HP/NP | Steuersignal |
| R/C | Adreß-Umschaltsignal |
| H/N-Z | Zustandssignal |
| CRT | Bildsteuerung |
| ALE | Adreßfreigabesignal des Hauptprozessors |
| T | Hauptprozessortakt |
| RAS | Zeilenadreßsignal |
| CAS | Spaltenadreßsignal |

| WE | Schreibsignal für den Arbeitsspeicher |
|---|---|
| WE-HP | Schreibsignal des Hauptprozessors |
| WE-NP | Schreibsignal des Nebenprozes-sors |
| REQ | Adreßfreigabesignal des Neben-prozessors |
| ACK | Quittungssignal |

zu Fig. 2

| BZ | Buszugriff des Hauptprozessors |
|---|---|
| T1,...,T4 | Taktzyklen des Hauptprozess-ortaktes während eines Bus-zugriffs BZ |
| T | Hauptprozessortakt |
| SZ | Speicherzugriff |
| SZ-HP | Speicherzugriff des Hauptpro-zessors |
| ALE | Adreßfreigabesignal des Haupt-prozessors |
| SEL | Quittungssignal |
| REQ | Adreßfreigabesignal des Nebenprozessors |
| ACK | Quittungssignal |
| SZ-NP | Speicherzugriff des Nebenprozessors |
| ADR-HP/NP | Steuersignal |
| H/N | Ausgangssignal des UND-Gliedes UG1 |
| STE | Startfreigabesignal |
| RAS | Zeilenadreßsignal |
| R/C | Adreß-Umschaltsignal |
| CAS | Spaltenadreßsignal |
| WE | Schreibsignal für den Arbeitsspeicher |
| NPRES | Ausgangssignal der Kippstufe KS15 |
| H/N-Z | Zustandssignal |
| RS-KS1 | Rücksetzsignal der Kippstufe KS1 |
| RS-KS2X | Rücksetzsignal |

zu Fig. 3

| HP | |
|---|---|
| Hauptprozessor | |
| ALE | |
| Adreßfreigabesignal des Hauptprozessors | |
| KS1 | |
| JK-Kippstufe | |
| UG2 | |
| UND-Glied | |
| ADR-HP/NP | |
| Steuersignal | |

| OG2 | |
|---|---|
| ODER-Glied | |
| STE | |
| Startfreigabesignal | |
| SW | |
| zyklisches Schaltwerk | |
| T | |
| Hauptprozessortakt | |
| H/N | |
| Ausgangssignal des UND-Gliedes UG1 | |
| UG1 | |
| Dreifach-UND-Glied | |
| OG1 | |
| ODER-Glied | |
| NEG1 | |
| Negator | |
| NEG2 | |
| Negator | |
| NP1,...,NPn | |
| n Nebenprozessoren | |
| KS21,...,KS2n | |
| n JK-Kippstufen | |
| REQ1,...,REQn | |
| Adreßfreigabesignale der n Nebenprozessoren | |
| RS-KS1 | |
| Rücksetzsignal der Kippstufe KS1 | |
| RS-KS2X | |
| Rücksetzsignal | |
| SEL | |
| Quittungssignal des Adreßvergleichers AV | |
| AV | |
| Adreßvergleicher | |
| NOG | |
| NOR-Glied | |
| REQX | |
| Adreßfreigabesignal des Nebenprozessors NPX | |
| RS-KS21,...,RS-KS2n | |
| Rücksetzsignale der JK-Kippstufen | |
| KS21,...,KS2n | |

zu Fig. 4

| SW | zyklisches Schaltwerk |
|---|---|
| KS11 | JK-Kippstufe |
| KS12 | Kippstufe |
| KS13 | Kippstufe |
| STE | Startfreigabesignal |
| RAS | Zeilenadreßsignal |
| R/C | Adreß-Umschaltsignal |
| CAS | Spaltenadreßsignal |
| HT | Hilfstakt |
| T | Hauptprozessortakt |
| WE-HP | Schreibsignal des Hauptprozessors |
| WE-NP | Schreibsignal des Nebenprozessors |
| H/N-Z | Zustandssignal |
| WE-MUX | Multiplexer |

| | |
|---|---|
| UG-WE | UND-Glied |
| KS14 | Kippstufe |
| WE | Schreibsignal für den Arbeitsspeicher |
| KS15 | Kippstufe |
| KS16 | Kippstufe |
| KS17 | Kippstufe |
| NPRES | Ausgangssignal der Kippstufe KS15 |

zu Fig. 5

| | |
|---|---|
| KS31 | Eingangs-Kippstufe |
| KS32 | Rücksetz-Kippstufe |
| KS33 | Rücksetz-Kippstufe |
| UG-HP | UND-Glied |
| UG-NP | UND-Glied |
| H/N | Ausgangssignal des UND-Gliedes UG1 |
| RAS | Zeilenadreßsignal |
| H/N-Z | Zustandssignal |
| R/C | Adreß-Umschaltsignal |
| RS-KS1 | Rücksetzsignal für die Kippstufe KS1 |
| RS-KS2X | Rücksetzsignal |
| NPRES | Ausgangssignal der Kippstufe KS15 |
| HT | Hilfstakt |
| T | Hauptprozessortakt |

**Ansprüche**

1. Schaltungsanordnung zur Steuerung des Speicherzugriffs für einen Hauptprozessor und wenigstens einen Nebenprozessor, der über das Bussystem des Hauptprozessors ebenfalls auf dessen Arbeitsspeicher zugreifen kann, wobei durch eine wechselseitige Zuordnung von Taktfrequenz des Hauptprozessors einerseits und Zykluszeit des Arbeitsspeichers andererseits die Buszugriffszeit des Hauptprozessors wenigstens der zweifachen Speicherzykluszeit entspricht und Zugriffe der Nebenprozessoren in Abhängigkeit vom Auftreten bzw. Nichtauftreten eines Adressfreigabesignals des Hauptprozessors nur außerhalb der dem Hauptprozessor für den Speicherzugriff zugeteilten Zeitspanne von der Länge einer Speicherzykluszeit möglich sind, **dadurch gekennzeichnet,** daß für den Hauptprozessor (HP) und für jeden Nebenprozessor (NP1,...NPn) je eine Kippstufe (KS1,KS21,...KS2n) vorgesehen ist, denen eingangsseitig das jeweils prozessorspezifische Adressfreigabe-Signal zugeführt ist, daß die den Nebenprozessoren zugeordneten Kippstufen (KS21,..., KS2n) ausgangsseitig über ein erstes ODER-Glied (DG1) verknüpft sind, dessen Ausgang mit dem ersten Eingang eines ersten UND-Gliedes (UG1) verbunden ist, daß dem zweiten Eingang dieses ersten UND-Gliedes (UG1) das negierte Ausgangssignal der dem Hauptprozessor zugeordneten Kippstufe (KS1) und dem dritten Eingang dieses UND-Gliedes das negierte Adressfreigabesignal des Hauptprozessors (HP) zugeführt ist, daß das Ausgangssignal dieses ersten UND-Gliedes (UG1) und der Ausgang der dem Hauptprozessor (HP) zugeordneten Kippstufe (KS1) über ein zweites ODER-Glied (OG2) miteinander verknüpft sind und daß der Ausgang dieses zweiten ODER-Gliedes (OG2) und der Ausgang des ersten UND-Gliedes (UG1) einem zyklischen Schaltwerk (SW) zur Ablaufsteuerung des Speicherzugriffs zugeführt sind.

2. Schaltungsanordnung nach Anspruch 1, **dadurch gekennzeichnet,** daß das Ausgangssignal der dem Hauptprozessor zugeordneten Kippstufe (KS1) und ein Quittungssignal (SEL) eines Adressvergleichers (AV) mit Hilfe eines zweiten UND-Gliedes (UG2) zu einem Steuersignal (ADR-HP/NP) zur Ansteuerung eines die Adressen von Haupt- bzw. Nebenprozessor durchschaltenden Adressmultiplexers (ADR-MUX) verknüpft sind und daß das Quittungssignal (SEL) und das negierte Ausgangssignal der dem Hauptprozessor zugeordneten Kippstufe (KS1) einem NOR-Glied (NOG) zugeführt sind, dessen Ausgang mit dem K-Eingang der als JK-Flip-Flop ausgebildeten Kippstufe (KS1) verbunden ist.

3. Schaltungsanordnung nach Anspruch 1 oder 2, **dadurch gekennzeichnet,** daß der Ausgang des zweiten ODER-Gliedes (OG2) mit dem Eingang einer ersten Kippstufe (KS11) des zyklischen Schaltwerks (SW) verbunden ist, das insgesamt aus drei in Serie geschalteten Kippstufen (KS11, KS12,KS13) besteht und an deren Ausgängen ein Zeilenadressignal (RAS), ein Adress-Umschaltsignal (R/C) und ein Spaltenadresssignal (CAS) zur entsprechenden Ansteuerung des Arbeitsspeichers (AS),eines zweiten Adressmultiplexers (R/C-MUX) und des Arbeitsspeichers abgreifbar sind.

4. Schaltungsanordnung nach Anspruch 3, **dadurch gekennzeichnet,** daß jeweils ein dem Haupt- oder Nebenprozessor zugeordnetes Schreibsignal über ein UND-Glied (UG-WE), dessen zweiter Eingang mit dem Ausgang der zweiten Kippstufe (KS12) des zyklischen Schaltwerks verbunden ist, an den Eingang einer vierten Kippstufe (KS14) durchschaltbar ist, daß der Ausgang der vierten Kippstufe (KS14) mit dem Schreibeingang des Areitsspeichers (AS) verbunden ist, daß der Ausgang der zweiten Kippstufe (KS12) des zyklischen Schaltwerks mit dem Eingang einer fünften Kippstufe (KS15) verbunden ist, die zusammen mit einer sechsten und siebten Kippstufe (KS16,KS17) ein dreistufiges Schieberegister bildet, daß der Ausgang der sechsten Kippstufe (KS16) mit dem Rücksetzeingang (R) der ersten Kippstufe (KS11) und der Ausgang der siebten Kippstufe (KS17) mit den Rücksetzeingängen der vierten, fünften und sechsten Kippstufe (KS14,KS15,KS16) verbunden sind.

5.  Schaltungsanordnung nach Anspruch 4, **dadurch gekennzeichnet,** daß die erste Kippstufe (KS11) des zyklischen Schaltwerks als JK-Kippstufe bei aktivem J-Eingang mit einer steigenden Flanke des Hauptprozessortaktes (T), die zweite Kippstufe (KS12) mit einer fallenden Flanke und die dritte Kippstufe (KS13) mit einer steigenden Flanke eines eine n-fach höhere Frequenz des Hauptprozessortaktes (T) aufweisenden Hilfstaktes (HT) setzbar sind.

6.  Schaltungsanordnung nach einem der Ansprüche 4 oder 5, **dadurch gekennzeichnet,** daß die dem Schreibeingang des Arbeitsspeichers zugeordnete vierte Kippstufe (KS14) von einer steigenden Flanke des Hauptprozessortaktes gesetzt wird, während die fünfte, sechste und siebte Kippstufe (KS15,KS16,KS17), die den Rücksetzzeitpunkt der Kippstufen des zyklischen Schaltwerks und der vierten Kippstufe festlegen, mit der steigenden bzw. fallenden Flanke des Hauptprozessortaktes bzw. mit einer fallenden Flanke des Hilfstaktes getaktet werden.

7.  Schaltungsanordnung nach einem der Ansprüche 4 bis 6, **dadurch gekennzeichnet,** daß zum Rücksetzen der mit dem jeweils prozessorspezifischen Adressfreigabesignal (ALE,REQ1...REQn) ansteuerbaren Kippstufen (KS1,KS21, ...,KS2n) eine Eingangs-Kippstufe (KS31) und zwei, jeweils der Eingangs-Kippstufe nachgeschaltete Rücksetzkippstufen (KS32, KS33) vorgesehen sind, daß an den Eingang der Eingangs-Kippstufe (KS31) das einen Speicherzugriff des Haupt- oder Nebenprozessors anzeigende Ausgangssignal (H/N) des ersten UND-Gliedes (UG1) und an den Takteingang das einen beginnenden Speicherzugriff anzeigende Zeilenadressignal (RAS) zugeführt ist, daß das negierte Ausgangssignal (H/N-Z) der Eingangs-Kippstufe (KS31) einerseits über ein UND-Glied (UG-HP) mit dem Adress-Umschaltsignal (R/C) verknüpft ist und andererseits an den Setzeingang der zweiten Rücksetz-Kippstufe (KS33) geführt ist, daß der Ausgang des der Eingangs-Kippstufe (KS31) nachgeschalteten UND-Gliedes (UG-HP) mit dem Eingang der ersten mit einer steigenden Flanke des Hauptprozessortaktes getakteten Rücksetz-Kippstufe (KS32) verbunden ist, an deren Ausgang ein Rücksetzsignal (RS-KS1) für die dem Hauptprozessor zugeordnete Kippstufe (KS1) abgreifbar ist und daß der Ausgang der dem zyklischen Schaltwerk zugeordneten fünften Kippstufe (KS15) einerseits an den Eingang der zweiten Rücksetz-kippstufe (KS33) geführt und andererseits mit dem negierten Ausgang dieser zweiten Rücksetz-Kippstufe (KS33) über ein weiteres UND-Glied (UG-NP) verknüpft ist, an dessen Ausgang ein Rücksetzsignal (RS-KS2X) für eine der den Nebenprozessoren zugeordneten Kippstufen (KS21,...,KS2n) abgreifbar ist.

**Claims**

1.  Circuit arrangement for controlling the memory access for a main processor and at least one subprocessor, which can likewise access the main memory of the main processor via the bus system of the latter, in which, as a result of an alternating assignment of clock frequency of the main processor on the one hand and cycle time of the main memory on the other hand, the bus access time of the main processor corresponds to at least twice the memory cycle time, and accesses of the subprocessors depending on the occurence or non-occurence of an address release signal of the main processor are possible only outside the time period, of the length of a memory cycle time, allocated to the main processor for the memory access, characterised in that there is provided for the main processor (HP) and for each subprocessor (NP1,.. .NPn) in each case one trigger element (KS1,KS21,-...KS2n), which is fed on the input side with the respective processor-specific address release signal, in that the trigger elements (KS21,...KS2n) assigned to the subprocessors are gated on the output side by means of a first OR gate (OG1), the output of which is connected to the first input of a first AND gate (UG1), in that the negated output signal of the trigger element (KS1) assigned to the main processor is fed to the second input of this first AND gate (UG1) and the negated address release signal of the main processor (HP) is fed to the third input of this AND gate, in that the output signal of this first AND gate (UG1) and the output of the trigger element (KS1) assigned to the main processor (HP) are gated with each other by means of a second OR gate (OG2) and in that the output of this second OR gate (OG2) and the output of the first AND gate (UG1) are fed to a cyclical sequence processor (SW) for controlling the execution of the memory access.

2. Circuit arrangement according to Claim 1, characterised in that the output signal of the trigger element (KS1) assigned to the main processor and an acknowledgement signal (SEL) of an address comparator (AV) are gated with the aid of a second AND gate (UG2) to form a control signal (ADR-HP/NP) for driving an address multiplexer (ADR-MUX) which switches through the addresses of main processor or subprocessor, and in that the acknowledgement signal (SEL) and the negated output signal of the trigger element (KS1) assigned to the main processor are fed to a NOR gate (NOG), the output of which is connected to the K input of the trigger element (KS1) designed as a J-K flip-flop.

3. Circuit arrangement according to Claim 1 or 2, characterised in that the output of the second OR gate (OG2) is connected to the input of a first trigger element (KS11) of the cyclical sequence processor (SW) which consists of a total of three series-connected trigger elements (KS11,KS12,KS13), and at the output of which it is possible to pick up a row address signal (RAS), an address switchover signal (R/C) and a column address signal (CAS) for the corresponding driving of the main memory (AS), of a second address multiplexer (R/C-MUX) and of the main memory.

4. Circuit arrangement according to Claim 3, characterised in that a write signal assigned to the main processor or subprocessor can be switched through in each case to the input of a fourth trigger element (KS14) via an AND gate (UG-WE), the second input of which is connected to the output of the second trigger element (KS12) of the cyclical sequence processor, in that the output of the fourth trigger element (KS14) is connected to the write input of the main memory (AS), in that the output of the second trigger element (KS12) of the cyclical sequence processor is connected to the input of a fifth trigger element (KS15), which forms together with a sixth and seventh trigger element (KS16,KS17) a three-stage shift register, in that the output of the sixth trigger element (KS16) is connected to the reset input (R) of the first trigger element (KS11) and the output of the seventh trigger element (KS17) is connected to the reset inputs of the fourth, fifth and sixth trigger element (KS14,KS15,KS16).

5. Circuit arrangement according to Claim 4, characterised in that the first trigger element (KS11) of the cyclical sequence processor, as a J-K trigger element with an active J input, can be set with a leading edge of the main processor clock (T), the second trigger element (KS12) can be set with a trailing edge, and the third trigger element (KS13) can be set with a leading edge of an auxiliary clock (HT) having a frequency n-times higher than the main processor clock (T).

6. Circuit arrangement according to one of Claims 4 or 5, characterised in that the fourth trigger element (KS14) assigned to the write input of the main memory is set by a leading edge of the main processor clock, while the fifth, sixth and seventh trigger elements (KS15,KS16,KS17), which define the resetting instant of the trigger elements of the cyclical sequence processor and of the fourth trigger element, are clocked with the leading or trailing edge of the main processor clock, or with a trailing edge of the auxiliary clock, respectively.

7. Circuit arrangement according to one of Claims 4 to 6, characterised in that one input trigger element (KS31) and two reset trigger elements (KS32,KS33), following the input trigger element in each case, are provided for resetting the trigger elements (KS1,KS21, ...,KS2n) which can be driven by the respective processor-specific address release signal (ALE,REQ1 ...REQn), in that the output signal (H/N) of the first AND gate (UG1) indicating a memory access of the main processor or subprocessor is fed to the input of the input trigger element (KS31) and the row address signal (RAS) indicating a beginning memory access is fed to the clock input, in that the negated output signal (H/N-Z) of the input trigger element (RS31) is gated with the address switchover signal (R/C) by means of an AND gate (UG-HP) on the one hand, and is fed to the set input of the second reset trigger element (KS33) on the other hand, in that the output of the AND gate (UG-HP) following the input trigger element (KS31) is connected to the input of the first reset trigger element (KS32) clocked with a leading edge of the main processor clock, at the output of which reset trigger element a reset signal (RS-KS1) for the trigger element (KS1) assigned to the main processor can be picked up, and in that the output of the fifth trigger element (KS15) assigned to the cyclical sequence processor is fed on the one hand to the input of the second reset trigger element (KS33), and on the other hand is gated with the negated output of this second reset trigger element (KS33) by means of a further AND gate (UG-NP), at the output of which a reset signal (RS-KS2X) for one of the trigger elements (KS21,...,KS2n) assigned to the subprocessors can be picked up.

## Revendications

1. Montage pour commander l'accès en mémoire pour un processeur principal et au moins un processeur auxiliaire, qui peut également accéder, par l'intermédiaire du système formant bus du processeur principal, à la mémoire de travail de ce processeur, et dans lequel grâce à une association alternative de la fréquence de cadence du processeur principal, d'une part, et de la durée du cycle de la mémoire de travail, d'autre part, le temps d'accès du processeur principal au bus correspond au moins au double de la durée du cycle de la mémoire et des accès des processeurs auxiliaires en fonction de l'apparition ou de la non-apparition d'un signal de libération d'adresse du processeur principal sont possibles uniquement en-dehors de l'intervalle de temps qui est affecté au processeur principal pour l'accès à la mémoire et qui est égal à la durée du cycle de la mémoire, caractérisé par le fait que pour le processeur principal (HP) et pour chaque processeur auxiliaire (NP1,...NPn), il est prévu respectivement un étage à bascule (KS1,KS21,...KS2n), au côté entrée duquel est envoyé le signal respectif de libération d'adresse, qui est spécifique au processeur, que les étages à bascule (KS21..., KS2n) associés aux processeurs auxiliaires sont réunis, côté sortie, par l'intermédiaire d'un premier circuit OU (OG1), dont la sortie est reliée à la première entrée d'un premier circuit ET (UG1), que le signal de sortie négativé de l'étage à bascule (KS1) associé au processeur principal est envoyé à la seconde entrée de ce premier circuit ET (UG1) et que le signal négativé de libération d'adresse du processeur principal (HP) est envoyé à la troisième entrée de ce circuit ET, que le signal de sortie de ce premier circuit ET (UG1) et la sortie de l'étage à bascule (KS1) associée au processeur principal (HP) sont combinés entre eux par l'intermédiaire d'un second circuit OU (OG2) et que la sortie de ce second circuit OU (OG2) et la sortie du premier circuit ET (UG1) sont raccordées à une unité de commutation cyclique (SW) pour la commande de l'exécution de l'accès à la mémoire.

2. Montage suivant la revendication 1, caractérisé par le fait que le signal de sortie de l'étage à bascule (KS1) associé au processeur principal et un signal d'accusé de réception (SEL) d'un comparateur d'adresses (AV) sont combinés, à l'aide d'un second circuit ET (UG2), pour former un signal de commande (ADR-HP/NP) servant à commander un multiplexeur d'adresses (ADR-MUX), qui transmet directement les adresses du processeur principal ou d'un processeur auxiliaire, et que le signal d'accusé de réception (SEL) et le signal de sortie négativé de l'étage à bascule (KS1) associé au processeur principal sont envoyés à un circuit NON-OU (NOG), dont la sortie est reliée à l'entrée (K) de l'étage à bascule (KS1) réalisé sous la forme d'une bascule bistable de type JK.

3. Montage suivant la revendication 1 ou 2, caractérisé par le fait que la sortie du second circuit OU (OG2) est reliée à l'entrée d'un premier étage à bascule (KS11) de l'unité de commutation cyclique (SW), qui est constituée au total de trois étages à bascule (KS11, KS12, KS13) branchés en série et sur les sorties desquels peuvent être prélevés un signal d'adresse de ligne (RAS), un signal de commutation d'adresses (R/C) et un signal d'adresse de colonne (CAS) pour réaliser la commande correspondante de la mémoire de travail (AS), d'un second multiplexeur d'adresses (R/C-MUX) et de la mémoire de travail.

4. Montage suivant la revendication 3, caractérisé par le fait que respectivement un signal d'enregistrement associé au processeur principal ou au processeur auxiliaire peut être transmis directement, par l'intermédiaire d'un circuit ET (UG-WE), dont la seconde entrée est raccordée à la sortie du second étage à bascule (KS12) de l'unité de commutation cyclique, à l'entrée d'un quatrième étage à bascule (KS14), que la sortie du quatrième étage à bascule (KS14) est raccordée à l'entrée d'enregistrement de la mémoire de travail (AS), que la sortie du second étage à bascule (KS12) de l'unité de commutation cyclique est raccordée à l'entrée d'un cinquième étage à bascule (KS15), qui forme, conjointement avec des sixième et septième étages à bascule (KS16,KS17), un registre à décalage à trois étages, que la sortie du sixième étage à bascule (KS16) est raccordée à l'entrée de remise à l'état initial (R) du premier étage à bascule (KS11) et que la sortie du septième étage à bascule (KS17) est raccordée aux entrées de remise à l'état initial des quatrième, cinquième et sixième étages à bascule (KS14,KS15,KS16).

5. Montage suivant la revendication 4, caractérisé par le fait que le premier étage à bascule (KS11) de l'unité de commutation cyclique, réalisé en tant que bascule bistable de type JK, peut être positionné, dans le cas où l'entrée J est active, avec un flanc montant de l'impulsion de cadence (T) du processeur principal, que le second étage à bascule (KS12) peut être positionné avec un flanc retombant et que le troisième étage à bascule (KS16) peut être positionné avec un flanc montant d'une impulsion de cadence auxiliaire (HT) possédant une fréquence n fois supérieure à la fréquence des impulsions de cadence (T) du processeur principal.

6. Montage suivant l'une des revendications 4 ou 5, caractérisé par le fait que le quatrième étage à bascule (KS14), associé à l'entrée d'enregistrement de la mémoire de travail, est positionné par un flanc montant de l'impulsion de cadence du processeur principal, tandis que les cinquième, sixième et septième étages à bascule (KS15,KS16,KS17), qui fixent l'instant de remise à l'état initial des étages à bascule de l'unité de commutation cyclique et du quatrième étage à bascule, sont commandés de façon cadencée par le flanc montant ou retombant de l'impulsion de cadence du processeur principal ou par un flanc retombant de l'impulsion de cadence auxiliaire.

7. Montage suivant l'une des revendications 4 à 6, caractérisé par le fait que pour la remise à l'état initial des étages à bascule (KS1,KS21...KS2n), qui peuvent être commandés par le signal de libération d'adresse (ALE,REQ1... REQn), spécifique au processeur, il est prévu un étage à bascule d'entrée (KS31) et deux étages à bascule de remise à l'état initial (KS32,KS33), qui sont branchés respectivement en aval de l'étage à bascule d'entrée, que le signal de sortie (H/N), qui indique un accès du processeur principal ou du processeur auxiliaire à la mémoire, du premier circuit ET (UG1) est envoyé à l'entrée de l'étage à bascule d'entrée (KS31) et le signal d'adresse de ligne (RS), qui indique le début d'un accès à la mémoire, est envoyé à l'entrée de cadence, que le signal de sortie négativé (H/N-Z) de l'étage à bascule d'entrée (KS31) est combiné d'une, part par, l'intermédiaire d'un circuit ET (UG-HP) au signal de commutation d'adresses (R/C) et est envoyé, d'autre part, à l'entrée de positionnement du second étage à bascule de remise à l'état initial (KS33), que la sortie du circuit ET (UG-HP), branchée en aval de l'étage à bascule d'entrée (KS31), est reliée à l'entrée du premier étage à bascule de remise à l'état initial (KS32), commandé de façon cadencée par un flanc montant de l'impulsion de cadence du processeur principal et à la sortie duquel un signal de remise à l'état initial (RS-KS1) peut être prélevé pour l'étage à bascule (KS1) associé au processeur principal, et que le signal de sortie du cinquième étage à bascule (KS15), associé à l'unité de commutation cyclique, est, d'une part, envoyé à l'entrée du second étage à bascule de remise à l'état initial (KS33), et, d'autre part, est combiné au signal de sortie négativé de ce second étage à bascule de remise à l'état initial (KS33), par l'intermédiaire d'un autre circuit ET (UG-NP), sur la sortie duguel un signal de remise à l'état initial (RS-KS2X) peut être prélevé pour l'un des étages à bascule (KS21...KS2n), associés aux processeurs auxiliaires.

# FIG 1

FIG 2

# FIG 3

## FIG 4

## FIG 5